# FASCICULE DE BREVET EUROPEEN

(11) **EP 2 351 357 B1**
(45) Date de publication et mention de la délivrance du brevet: **30.11.2016**
(21) Numéro de dépôt: 09753156.0
(22) Date de dépôt: 29.09.2009
(51) Int. Cl.: H04N 21/234, H04N 21/2381, H04N 21/434, H04N 21/438, H04N 21/4385, H04N 5/44, H04N 21/643, H04N 21/44

(54) **PROCÉDÉ DE GESTION DE LA RÉCEPTION D'UNE COMMANDE DE CHANGEMENT DE SERVICES DANS UN DÉCODEUR DE TÉLÉVISION NUMÉRIQUE**
VERFAHREN ZUR VERWALTUNG DES EMPFANGS EINES BEFEHLS, DIENSTE IN EINEM DIGITALEN FERNSEHDECODER ZU ÄNDERN
METHOD OF MANAGING THE RECEIPT OF A COMMAND TO CHANGE SERVICES IN A DIGITAL TELEVISION DECODER

(30) Priorité: 02.10.2008 FR 0856684
(43) Date de publication de la demande: 03.08.2011
(73) Titulaire: Sagemcom Broadband SAS, 92500 Rueil-Malmaison (FR)
(72) Inventeur: THEA, Eric, F-92500 Rueil Malmaison (FR)
(74) Mandataire: Camus, Olivier Jean-Claude
(86) Numéro de dépôt international: PCT/FR2009/051849
(87) Numéro de publication internationale: WO 2010/037966

(56) Documents cités:
- EP-A- 0 849 958
- EP-A2- 1 819 074
- JP-A- 2007 282 001
- US-A1- 2002 172 198
- US-A1- 2007 192 812

## Description

### DOMAINE TECHNIQUE DE L'INVENTION

La présente invention a pour objet un procédé de gestion de la réception d'une commande de changement de services dans un décodeur de télévision numérique. Par service, on entend classiquement ce que les utilisateurs appellent une chaîne de télévision, par exemple une chaîne diffusant au cours de la journée des programmes successifs les uns aux autres. Néanmoins les services peuvent être des services uniquement audio ou des services de données ou autres.

L'invention a notamment pour but de proposer un procédé dans lequel l'intégrité des données, notamment audio et vidéo, présente une opération de vérification et de correction avancée, tout en présentant un temps de changement de service, ou temps de zapping, comparable aux temps de zapping observés jusqu'à présent avec des transmissions pour lesquelles l'opération performante de correction de données n'est pas mise en oeuvre.

Le domaine de l'invention est, d'une façon générale, celui des décodeurs de télévision numérique. L'invention sera plus particulièrement décrite dans le cadre des décodeurs recevant un flux de signaux via le réseau Internet, décodeurs qui seront désignés par la suite comme décodeurs IP, mais la mise en oeuvre du procédé selon l'invention n'est pas limitée à ce type de décodeurs.

Dans le domaine de la télévision numérique, des décodeurs de télévision numérique sont utilisés, notamment afin d'accéder à un ensemble de chaînes de télévision qui sont transmises cryptées et qui sont décryptées au sein du décodeur. Les décodeurs de télévision sont des organes interfaces entre des systèmes de transmission de signaux de télévision, notamment de signaux de télévision numérique au format MPEG et DVB, et des moniteurs de visualisation. Souvent, le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques.

Les moyens de transmission qui transmettent les émissions de télévision à ces décodeurs/récepteurs sont soit des moyens de transmission aériens classiques, soit des câbles coaxiaux, voire optiques, soit des satellites de réemission qui desservent une région, soit encore le réseau Internet. Le décodeur comporte des moyens de réception pour recevoir les signaux émis et des moyens de formatage pour transformer les signaux reçus en des signaux applicables directement sur les organes de commande du dispositif de visualisation. Pour un tube cathodique il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue différents types de tables : les tables SI (Information Système), les tables PSI (Informations Spécifiques de Programmes), les tables NIT (Tables d'Information de Réseau), les tables EIT (Tables d'Evénements), les tables PAT (Table des Programmes Associés), la table CAT (Table de Contrôle d'Accès) ou encore les tables PMT (Table des Composants des Programmes)...

Dans la télévision numérique, il est prévu que les signaux de paramètres soient transmis dans le flux (c'est à dire avec le signal vidéo lui-même) dans des paquets de données. Les paquets de données transmis sont arrangés en sections, les sections comportant classiquement 1024 octets ou, dans certains cas, 4096 octets. Une fois reçus, les différents paquets sont attribués aux tables appropriées. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données ou autre. Dans chaque section, des identifiants permettent d'attribuer les paquets de données à des tables particulières parmi d'autres. En réception, un décodeur ne sait pas au premier abord comment sont répartis les paquets de données mais il peut reconnaître un découpage des sections. Le décodeur doit donc lire l'identifiant dans chaque section et réorganiser les données pour les affecter aux bonnes tables. Tous les signaux de paramètres relatifs aux différentes tables sont édités par les opérateurs de télévision ou les gestionnaires de média de transport, sont incorporés dans le flux de cet opérateur, et sont acheminés vers les utilisateurs par les différents médias.

En définitive, toute une architecture de tables est ainsi distribuée, en particulier selon la norme EN 300 468 et le but du décodeur est de reconstruire toutes les tables pour disposer des informations de réglage ainsi que des informations à montrer en visualisation pour les utilisateurs.

Dans chaque flux de signaux multiplexés émis, quel que soit le support physique utilisé, une table dite PAT, Program Association Table, est diffusée. Cette table, qui est une table PSI définie dans la norme ISO/IEC 13818-1, donne la liste des services disponibles dans le flux de signaux multiplexés considéré ; elle-même donne ainsi la liste des tables PMT, Program Map Table, (table PSI définie dans la norme ISO/IEC 13818-1), qui sont associées à chacun des services, et qui définit, pour chaque service, la liste des composantes associées à ce service.

Pour chaque service, on trouve dans la table PMT notamment une information de contrôle d'accès associée à ce service. La table CAT de contrôle d'accès permet de prélever cette information et fait exécuter la transmission de cette information vers un microprocesseur du décodeur, ce dernier pouvant alors déterminer si l'utilisateur du décodeur a les droits sur ce service. Si c'est le cas, le microprocesseur renvoie une information appropriée qui permet d'obtenir une clé numérique de décryptage du service considéré. Ce dernier peut alors être restitué en clair sur un écran de visualisation.

La norme MPEG2 permet de multiplexer plusieurs services dans un même Transport Stream (TS) ou canal. Cette norme est complétée par la norme DVB qui permet la constitution et le changement de service, ou zapping sur plusieurs flux de signaux multiplexés au sein d'un même et unique réseau.

### ARRIERE-PLAN TECHNOLOGIQUE DE L'INVENTION

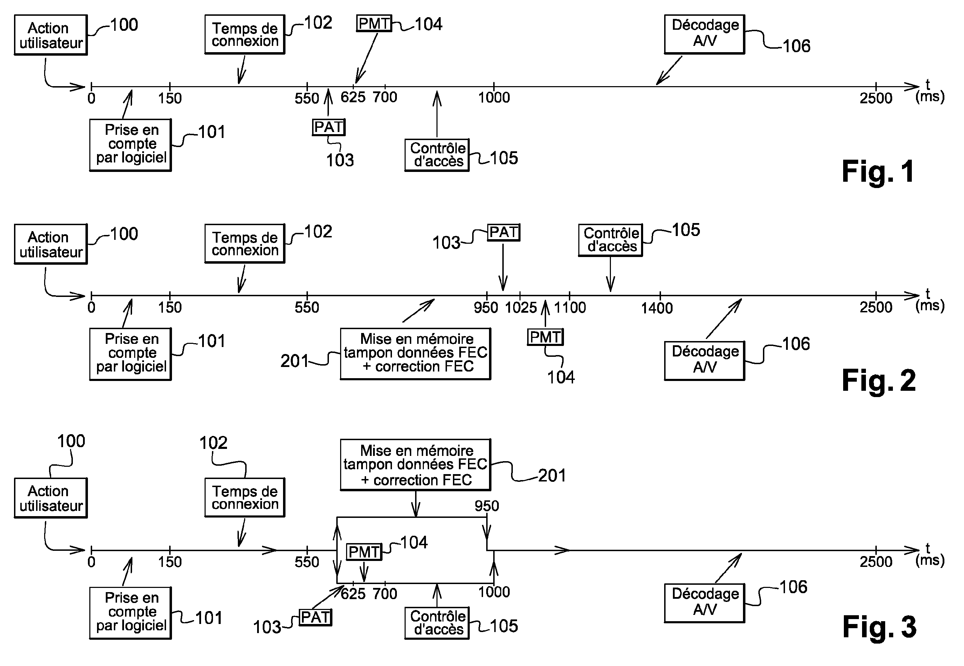

Dans l'état de la technique, une opération de zapping sur un décodeur IP suit les différentes étapes montrées sur le chronogramme de la figure 1. Sur cette figure, on repère l'instant initial (t=0) comme étant l'instant où un utilisateur réalise une action 100 pour effectuer un changement de service. Une telle action est le plus souvent constituée par l'appui sur une ou plusieurs touches appropriées d'une télécommande associée au décodeur. L'écoulement du temps de zapping est repéré par rapport à cette référence temporelle.

Une première étape 101 réside alors dans la prise en compte, par le logiciel de fonctionnement du décodeur IP, de l'action de l'utilisateur. La durée de cette étape est typiquement de 150 ms (millisecondes). Cette durée est utilisée notamment pour que le logiciel de fonctionnement décharge une application spécifique pour le zapping, éventuellement pour un échange avec un serveur distant pour obtenir différentes requêtes, et également pour vérifier que l'utilisateur ne communique pas, pendant cet intervalle de temps, une instruction annulant la commande de zapping initialement reçue.

Suit alors une deuxième étape 102, au cours de laquelle le décodeur IP exécute une commande dite "commande IGMP join". La durée de cette étape est voisine de 400 ms ; elle correspond à un temps de connexion du décodeur, temps nécessaire, à partir de l'exécution de la commande IGMP join, pour recevoir des premiers paquets de données appropriés extraits d'un flux de signaux multicastés. Dans le cas des décodeurs terrestres, satellites ou câbles, le temps de connexion du décodeur correspond du temps qui s'écoule entre un agissement sur le tuner du décodeur, et la réception effective des premiers paquets de données.

Une opération de mise en mémoire tampon des données reçues dans le flux, avec un démultiplexage des différentes composantes est alors réalisée. Une telle opération prend cependant un temps négligeable du fait de la réalisation en dur (hardware en langue anglaise) des différents composants intervenant.

On procède ensuite à l'acquisition des différentes tables et paramètres nécessaires pour réaliser l'opération de zapping :
Ainsi, une étape suivante 103, qui dure typiquement 75 ms, est une étape d'acquisition de la table PAT.
Puis, une étape 104 suit, d'une durée moyenne de 75 ms, dans laquelle la table PMT est acquise.
Ensuite, dans une étape suivante 105, le contrôle d'accès est effectué; celui-ci dure environ 300 ms, et consiste essentiellement en : - une analyse des descripteurs de la table PMT (principalement le descripteur identifié CA_descriptor - tag : 0x09) ; - puis en la pose de filtres au niveau d'un démultiplexeur du décodeur pour recevoir les ECM (Entitlement Control Message en langue anglaise, défini dans la norme ISO/IEC 13818-1) ; - puis en un dialogue avec la carte à puce du décodeur pour définir si l'utilisateur a les droits sur le service désiré ; - le cas échéant, en un décryptage des ECM en mots de contrôle CW (Control Word en langue anglaise) ; les mots de contrôle seront alors fournis au décrypteur (descrambler en langue anglaise) pour accéder en clair aux différentes composantes du service désiré.
Une fois les différents paramètres et tables acquis, on procède, dans une étape suivante 106, à l'opération de décodage audio et vidéo pour le service désiré. Le temps pris entre la communication des données audio et vidéo au décodeur audio et vidéo du décodeur IP et l'affichage effectif sur l'écran de visualisation est de l'ordre de 1500 ms.

Ainsi, pour procéder à une opération de zapping dans les décodeurs IP de l'état de la technique, une durée voisine de 2500 ms est requise.

Les flux de signaux transmis aux décodeurs IP transitent par des équipements de type DSLAM. Le flux est alors directement envoyé vers les différents décodeurs IP, avec une atténuation progressive du signal utile. Plus un utilisateur de décodeur IP se situe loin du DSLAM qui lui fournit le flux de signaux, plus le rapport signal/bruit est important, et plus le risque d'erreur dans la reconstitution des signaux audio-vidéo est grand. En conséquence, afin d'augmenter le nombre d'utilisateurs susceptibles d'être accessibles à partir d'un DSLAM donné sans que le signal soit bruité de manière prohibitive, on a récemment proposé l'utilisation d'un système de protection avancé contre les erreurs susceptibles de se produire lors de la transmission de données.

Le système FEC (pour Forward Error Correction en langue anglaise) a été choisi. A l'avenir, d'autres systèmes pourront éventuellement être choisis, sans remettre pour autant en cause le fonctionnement du procédé selon l'invention. Dans la mise en oeuvre du système FEC, l'émetteur ajoute de la redondance afin de permettre au destinataire, le décodeur IP dans le cas présent, de détecter et de corriger une partie des erreurs qui auraient pu se produire. En outre, un tel système, même s'il nécessite de la redondance d'informations, permet d'éviter la retransmission, et donc de faire des économies de bande passante.

De manière générale, on peut considérer le fonctionnement du système FEC comme suit : le flux de signaux reçus par le décodeur IP est constitué d'ne pluralité de composantes multiplexées. Le système FEC répartit notamment les composantes audio et vidéo dans différents ensembles de données, au moins un premier ensemble de données et un deuxième ensemble de données, qui sont chacun organisés sous la forme de matrices, respectivement une première matrice et une deuxième matrice de données audio et vidéo. A chaque ligne ou colonne de la matrice correspond une donnée redondante de correction : si une des données audio-vidéo d'une colonne a été entachée d'une erreur, alors la donnée considérée peut être corrigée à partir de la donnée de correction associée à la colonne considérée, et des données non corrompues de la même colonne.

A la figure 2, on a représenté un exemple de mise en oeuvre d'une opération de zapping sur un flux de signaux dans lequel le système de correction FEC est mis en place. Les deux premières étapes de l'opération de zapping de cet exemple sont identiques aux deux étapes de l'exemple illustré à la figure 1. A l'issue de l'étape 102, marquée par un temps de connexion de l'ordre de 400 ms, on procède, dans une étape 201, à la mise en mémoire tampon d'au moins un premier ensemble de données et d'un deuxième ensemble de données, puis à la correction des composantes audio-vidéo ainsi mémorisées.

Dans le système FEC, les données de correction du premier ensemble de données sont transmises avec les données du deuxième ensemble de données. On limite ainsi les risques d'erreur non corrigeable en espaçant dans le temps les données audio-vidéo et les données de correction susceptibles d'être utilisées pour corriger les données audio-vidéo considérées. Une contrepartie d'un tel fonctionnement est qu'il est nécessaire de mémoriser au moins deux matrices, soit deux ensembles de données, avant de pouvoir entamer les opérations de correction du système FEC. Ainsi, en considérant un flux de signaux de type flux SD (Simple Definition) à 2,2 Mbits/s, et une taille de matrice de 8 colonnes sur 5 lignes, le temps de mise en mémoire tampon et de mise en oeuvre de la correction est voisin de 400 ms.

L'étape 201 s'achève ainsi, avec l'obtention de composantes audio-vidéo corrigées, environ 950 ms après l'action de l'utilisateur pour réaliser un changement de service. L'étape 201 est cruciale pour proposer une bonne qualité audio-vidéo car, contrairement aux composantes de fonctionnement, toute perte de donnée audio-vidéo risque de créer des défauts visuels, de type macro-bloc, images figées ou saccadées, écran noir...A l'issue des l'étape 201, les étapes 103, 104, 105 et 106, détaillées lors de la description du premier exemple de mise en oeuvre, sont reprises.

Dans un tel exemple, l'opération de zapping est donc de l'ordre de 2900 ms ; on constate donc une augmentation importante de l'ordre de 20% du temps de zapping.

### DESCRIPTION GENERALE DE L'INVENTION

Le procédé selon l'invention propose une solution aux problèmes et inconvénients qui viennent d'être exposés. Dans l'invention, on propose une solution pour mettre en oeuvre un système de correction de type FEC, tout en maintenant un temps de zapping comparable à celui observé avant l'utilisation d'un tel temps de zapping. A cet effet, dans l'invention, on propose de réaliser en parallèle plusieurs opérations intervenant nécessairement dans un procédé de changement de service.

L'invention concerne donc essentiellement un procédé de gestion selon une des revendications 1 - 9.

La présente invention se rapporte également à un décodeur de télévision numérique selon la revendication 10.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, un chronogramme illustrant le déroulement d'une séquence de zapping pour un décodeur de télévision numérique recevant un flux de signaux classique via le réseau Internet ;
- à la figure 2, également déjà décrite, un chronogramme illustrant le déroulement, dans l'état de la technique, d'une séquence de zapping pour un décodeur de télévision numérique recevant un flux de signaux obéissant au système FEC via le réseau Internet ;
- à la figure 3, un chronogramme illustrant le déroulement, dans un exemple de mise en oeuvre du procédé selon l'invention, d'une séquence de zapping pour un décodeur de télévision numérique recevant un flux de signaux obéissant au système FEC via le réseau Internet ;

### DESCRIPTION DES FORMES DE REALISATION PREFEREES DE L'INVENTION

Les différents éléments apparaissant sur plusieurs figures auront gardé, sauf précision contraire, la même référence.

A la figure 3, on a représenté un chronogramme illustrant le déroulement d'un exemple de mise en oeuvre du procédé selon l'invention.

Dans cet exemple, les opérations et étapes 100, 101 et 102, déjà présentes dans les deux premiers exemples sont reprises. A l'issue de l'étape 102, le flux de signaux est simultanément transmis :
- au démultiplexeur du décodeur, où une opération d'extraction des composantes de fonctionnement est réalisée au travers des étapes 103, 104 et 105 ; et
- à la mémoire tampon du décodeur dans laquelle les données mémorisées subissent le processus de correction de type FEC, dans une 201 identique à l'étape 201 du deuxième exemple mentionné.

Les données envoyées au multiplexeur ne sont donc pas des données corrigées par le système FEC. L'intégrité des composantes de fonctionnement en sortie du démultiplexeur est cependant assurée par les caractéristiques suivantes :
- les composantes de fonctionnement qui sont extraites du flux par le multiplexeur comportent intrinsèquement un CRC (Cyclic Redundancy Check), qui permet à lui seul de vérifier l'intégrité des données constituant ces composantes. Si une composante de fonctionnement est détectée non intègre par le mécanisme de CRC, on attend, dans un exemple avantageux de mise en oeuvre de l'invention, une occurrence suivante de ladite composante dans le flux de signaux ;
- la probabilité qu'une erreur touche les composantes de fonctionnement considérées est faible car ces données représentent, dans le flux de signaux, un débit beaucoup moins élevées.

A l'issue des étapes 201 et 105, l'étape 106 de décodage audio-vidéo est mise en oeuvre. Avantageusement, le démarrage de cette étape 106 n'a lieu que lorsque l'étape 201 de correction par le système FEC est achevée pour au moins une matrice.

La mise en oeuvre de l'exemple décrit tire un avantage du fait que la durée des étapes 103, 104 et 105 d'une part, et la durée de l'étape 201 d'autre part, sont relativement proches. Par rapport au deuxième exemple décrit, on réalise ainsi une économie de temps de l'ordre de 400 ms pour réaliser une opération de changement de service, et on obtient ainsi une durée totale de l'ordre de 2500 ms, identique à la durée de zapping de l'état de la technique en l'absence du système de correction FEC.

Le décodeur selon l'invention comporte notamment des moyens pour mettre en oeuvre le procédé selon l'invention, et notamment une mémoire de programmes avec une première application pour effectuer les corrections du système FEC, une deuxième application pour orienter simultanément les flux de signaux reçus vers le démultiplexeur et la mémoire tampon mentionnés, et une troisième application pour retarder l'étape de décodage du flux audio-vidéo tant que les opérations d'extraction des composantes de fonctionnement et de correction FEC ne sont pas achevées au moins pour le premier ensemble de données précédemment mentionné.

## Revendications

1. Procédé de gestion, dans un décodeur de télévision numérique recevant un flux de signaux comportant un ensemble de composantes réparties au moins dans un premier ensemble de données et un deuxième ensemble de données, de la réception (100) d'une commande de changement de services ;
le procédé comportant les différentes étapes consistant à :
- transmettre simultanément le flux de signaux reçu par le décodeur à un démultiplexeur et à une mémoire tampon du décodeur de télévision numérique, au moins le premier ensemble de données, et le deuxième ensemble de données du flux de signaux étant alors mémorisés dans ladite mémoire tampon ;
- au moyen du démultiplexeur, extraire (103 ; 104 ; 105) du flux de signaux transmis un ensemble de composantes de fonctionnement du décodeur ;
- aux composantes mémorisées dans la mémoire tampon, appliquer (201), pendant l'extraction de l'ensemble de composantes de fonctionnement du décodeur, un système de correction de données reçues pour obtenir des composantes corrigées ;
- procéder (106) au décodage audio/vidéo des composantes corrigées.

2. Procédé selon la revendication précédente **caractérisé en ce que** le système de correction appliqué aux composantes mémorisées dans la mémoire tampon est un système de type FEC.

3. Procédé selon la revendication précédente **caractérisé en ce que** l'étape de mémorisation des composantes dans la mémoire tampon du décodeur consiste à mémoriser au moins le premier ensemble de données, comportant notamment un premier ensemble de composantes audio et vidéo, et le deuxième ensemble de données comportant notamment un deuxième ensemble de composantes audio et vidéo et des données de correction du premier ensemble de composantes audio et vidéo.

4. Procédé selon la revendication précédente **caractérisé en ce que** l'étape consistant à procéder (106) au décodage audio/vidéo des composantes corrigées comporte l'étape préliminaire consistant à achever :
- une opération de correction du premier ensemble de données au moyen des données de correction comprises dans le deuxième ensemble de données ; et
- une opération de vérification concluante de l'intégrité des composantes de fonctionnement extraites, au moyen du démultiplexeur, du flux de signaux transmis.

5. Procédé selon la revendication précédente **caractérisé en ce que** les composantes de fonctionnement comportent des moyens de vérification d'intégrité de type CRC.

6. Procédé selon l'une au moins des revendications 4 ou 5 **caractérisé en ce que**, si l'opération de vérification de l'intégrité des composantes de fonctionnement extraites au moyen du démultiplexeur du premier ensemble de données du flux de signaux transmis aboutit à une détection d'erreur et que l'opération de correction du premier ensemble de données audio et vidéo au moyen des données de correction comprises dans le deuxième ensemble de données est achevée, ledit procédé comporte l'étape supplémentaire consistant à renouveler l'opération de vérification de l'intégrité des composantes de fonctionnement extraites au moyen du démultiplexeur d'un ensemble de données suivant du flux de signaux transmis.

7. Procédé selon l'une au moins des revendications précédentes **caractérisé en ce que** les composantes de fonctionnement extraites du flux de signaux au moyen du démultiplexeur comportent au moins une des composantes suivantes : tables PMT (Table des Composants des Programmes) ; table PAT (Table des Programmes Associés); données de contrôle d'accès.

8. Procédé selon l'une au moins des revendications précédentes **caractérisé en ce que** le flux de signaux reçu par le décodeur est un flux de signaux transmis selon le protocole Internet.

9. Procédé selon l'une au moins des revendications précédentes **caractérisé en ce que** le flux de signaux reçu par le décodeur est un flux de signaux transmis par le câble, par des moyens de transmission terrestres, ou par satellite.

10. Décodeur de télévision numérique apte à mettre en oeuvre toutes les étapes du procédé selon l'une des revendications précédentes.

## Patentansprüche

1. Verwaltungsverfahren des Empfangs (100) eines Dienständerungsauftrags in einem digitalen Fernsehdecoder, der einen Signalstrom empfängt, der eine Gruppe von Bestandteilen, die wenigstens über einen ersten Datenbestand verteilt sind, und einen zweiten Datenbestand umfasst;
wobei das Verfahren die unterschiedlichen Schritte umfasst, bestehend aus:
- gleichzeitigem Übertragen des vom Decoder empfangenen Signalstroms auf einen Multiplexer und einen Pufferspeicher des digitalen Fernsehdecoders, wenigstens des ersten Datenbestandes und wobei der zweite Datenbestand des Signalstroms dann in dem genannten Pufferspeicher gespeichert wird;
- Extrahieren (103; 104; 105) einer Gruppe von Funktionsbestandteilen des Decoders aus dem übertragenen Signalstrom mittels des Demultiplexers;
- Anwenden (201) eines Korrektursystems von empfangenen Daten während der Extraktion der Gruppe von Funktionsbestandteilen des Decoders auf die in dem Pufferspeicher gespeicherten Bestandteile, um korrigierte Bestandteile zu erhalten;
- Durchführen (106) der Audio- / Videodekodierung der korrigierten Bestandteile.

2. Verfahren gemäß dem voranstehenden Anspruch, **dadurch gekennzeichnet, dass** das Korrektursystem, das auf die im Pufferspeicher abgespeicherten Bestandteile angewendet wird, ein System vom Typ FEC ist.

3. Verfahren gemäß dem voranstehenden Anspruch, **dadurch gekennzeichnet, dass** der Speicherschritt der Bestandteile im Pufferspeicher des Decoders in der Speicherung wenigstens des ersten Datenbestandes besteht, umfassend insbesondere eine erste Gruppe von Audio- und Videobestandteilen, und wobei der zweite Datenbestand insbesondere eine zweite Gruppe von Audio- und Videobestandteilen und Korrekturdaten der ersten Gruppe von Audio- und Videobestandteilen umfasst.

4. Verfahren gemäß dem voranstehenden Anspruch, **dadurch gekennzeichnet, dass** der Schritt, der in der Durchführung (106) der Audio- / Videodecodierung der korrigierten Bestandteile besteht, den einleitenden Schritt umfasst, bestehend in dem Abschluss:
- einer Korrekturoperation des ersten Datenbestandes mittels Korrekturdaten, die in dem zweiten Datenbestand inbegriffen sind; und
- einer schlüssigen Überprüfungsoperation der Integrität der mittels des Demultiplexers aus dem übertragenen Signalstrom extrahierten Funktionsbestandteilen.

5. Verfahren gemäß dem voranstehenden Anspruch, **dadurch gekennzeichnet, dass** die Funktionsbestandteile Integritätsüberprüfungsmittel vom Typ CRC umfassen.

6. Verfahren gemäß wenigstens einem der Ansprüche 4 oder 5, **dadurch gekennzeichnet, dass**, wenn die Überprüfungsoperation der Integrität der Funktionsbestandteile, die mittels des Demultiplexers aus dem ersten Datenbestand des übertragenen Datenstroms extrahiert werden, zu einer Fehlererkennung führt und die Korrekturoperation des ersten Audio- und Videodatenbestandes mittels der Korrekturdaten, die in dem zweiten Datenbestand inbegriffen sind, abgeschlossen ist, das genannte Verfahren den zusätzlichen Schritt umfasst, der in der Wiederholung der Überprüfungsoperation der Integrität der Funktionsbestandteile besteht, die mittels des Demultiplexers aus einem Datenbestand gemäß dem übertragenen Datenstrom extrahiert sind.

7. Verfahren gemäß wenigstens einem der voranstehenden Ansprüche, **dadurch gekennzeichnet, dass** die Funktionsbestandteile, die aus dem Signalstrom mittels des Demultiplexers extrahiert sind, wenigstens einen der folgenden Bestandteile umfassen: Tabellen PMT (Tabelle der Bestandteile der Programme); Tabelle PAT (Tabelle der Zugeordneten Programme); Zugangskontrolldaten.

8. Verfahren gemäß wenigstens einem der voranstehenden Ansprüche, **dadurch gekennzeichnet, dass** der vom Decoder empfangene Signalstrom ein gemäß dem Internetprotokoll übertragener Signalstrom ist.

9. Verfahren gemäß wenigstens einem der voranstehenden Ansprüche, **dadurch gekennzeichnet, dass** der von dem Decoder empfangene Signalstrom ein Signalstrom ist, der per Kabel, per terrestrischen Übertragungsmitteln oder per Satellit übertragen wird.

10. Digitaler Fernsehdecoder, der geeignet ist, alle Schritte des Verfahrens gemäß einem der voranstehenden Ansprüche umzusetzen.

## Claims

1. Method of managing, in a digital television decoder receiving a stream of signals comprising a set of components distributed at least in a first data set and a second data set, the reception (100) of a command to change services;
the method comprising the different steps consisting in:
- simultaneously transmitting the stream of signals received by the decoder to a demultiplexer and to a buffer memory of the digital television decoder, at least the first data set, and the second data set of the stream of signals then being stored in said buffer memory;
- using the demultiplexer, extracting (103; 104; 105) from the stream of signals transmitted a set of operating components of the decoder;
- to the components stored in the buffer memory, applying (201), during the extraction of the set of operating components of the decoder, a system for correcting data received so as to obtain corrected components;
- undertaking (106) the audio/video decoding of the corrected components.

2. Method according to the preceding claim, **characterised in that** the correction system applied to the components stored in the buffer memory is an FEC type system.

3. Method according to the preceding claim, **characterised in that** the step of storing the components in the buffer memory of the decoder consists in memorising at least the first data set, notably comprising a first set of audio and video components, and the second data set notably comprising a second set of audio and video components and correction data of the first set of audio and video components.

4. Method according to the preceding claim, **characterised in that** the step consisting in undertaking (106) the audio/video decoding of the corrected components comprises the preliminary step consisting in completing:
- an operation of correction of the first data set using the correction data comprised in the second data set; and
- an operation of conclusive verification of the integrity of the operating components extracted, using the demultiplexer, from the transmitted stream of signals.

5. Method according to the preceding claim, **characterised in that** the operating components comprise CRC type integrity verification means.

6. Method according to one at least of claims 4 or 5, **characterised in that**, if the operation of verification of the integrity of the operating components extracted using the demultiplexer from the first data set of the transmitted stream of signals ends up in an error detection and that the operation of correction of the first set of audio and video data using the correction data comprised in the second data set is completed, said method comprises the additional step consisting in renewing the operation of verification of the integrity of the operating components extracted using the demultiplexer from a following data set of the transmitted stream of signals.

7. Method according to one at least of the preceding claims, **characterised in that** the operating components extracted from the stream of signals using the demultiplexer comprise at least one of the following components: PMT (Programme Map Tables); PAT (Programme Association Tables); access control data.

8. Method according to one at least of the preceding claims, **characterised in that** the stream of signals received by the decoder is a stream of signals transmitted according to the Internet protocol.

9. Method according to one at least of the preceding claims, **characterised in that** the stream of signals received by the decoder is a stream of signals transmitted by cable, by terrestrial transmission means, or by satellite.

10. Digital television decoder capable of implementing all the steps of the method according to one of the preceding claims.
